# EUROPEAN PATENT SPECIFICATION

(11) **EP 0 769 895 B1**
(45) Date of publication and mention of the grant of the patent: **12.08.1998**
(21) Application number: 95917294.1
(22) Date of filing: 25.04.1995
(51) Int. Cl.: A01B 63/102, A01D 34/66

(54) **A LIFT-SUSPENDED MOWING MACHINE**
SCHLEPPER-AUFGEHANGENE MÄHMASCHINE
FAUCHEUSE SUSPENDUE A UN ENGIN DE LEVAGE

(30) Priority: 26.04.1994 DK 48294
(43) Date of publication of application: 02.05.1997
(73) Proprietor: JF-FABRIKEN - J. FREUDENDAHL A/S, DK-6400 Sonderborg (DK)
(72) Inventor: FREUDENDAHL, Jörn, DK-6400 Sönderborg (DK); NIELSEN, Harald Raun, DK-6470 Sydals (DK)
(74) Representative: Raffnsöe, Knud Rosenstand
(86) International application number: DK9500169
(87) International publication number: WO9528825

(56) References cited:
- EP-A- 361 573
- EP-A- 377 962
- EP-A- 579 564
- US-A- 3 542 135
- US-A- 4 193 458
- US-A- 5 199 250

## Description

The invention relates to a lift-suspended mower with a mowing aggregate suspended in a carrier construction which is pivotally connected with a frame for mounting on the lift-suspension of a tractor, the mowing aggregate with accompanying carrier construction being pivotally movable between a working position, in which the mowing aggregate and the carrier construction are positioned laterally outside the track of the tractor and a transport position, in which the mower is present behind the tractor within its track, means being provided for transmission of a moment of force from the tractor to the mower to lift it as a whole.

Mowers of this type are well-known and may in the transport position either be swung about a horizontal axis parallel with the direction of travel to an upright position or be swung about a vertical axis to a position behind the mower.

If such mowers are built with a very big pass width, which partly makes them heavy, and which partly makes them in the working position extend far out to the side of the tractor, problems will arise in lifting them by means of the lift of the tractor, because they act on the tractor with a considerable moment. This problem particularly occurs, when during mowing, at turns in the field it is desired to lift the mower from the working position in order to be able to pass already cut crop. The moment acting on the tractor may thereby give rise to an increased risk of tilting of the tractor. The problem is smaller when the mower is in transport position, either because the moment, with which the mower acts on the tractor is smaller (at an upright transport position), or because the tractor is better to absorb the moment (in the transport position behind the tractor).

EP-A- 0 361 573, which serves as basis of claim 1, discloses a mower of the type mentioned by way of introduction, which at each side of the mowing aggregate and behind it is provided with support wheels carrying the mowing aggregate partially during work. The mowing aggregate is spring-relieved relative to the support wheels, which are not rotatable around an upright axis, and are lifted together with the mower when it is lifted. This mower is thus not able to solve the above-mentioned problem.

From EP-A- 0 486 414 a mower is known which is suspended in a carrier frame which at one end is connected with the three-point suspension lift and which at its other end is carried by a carrier wheel which in the working position is always in contact with the ground. In this known construction no lifting moment is transferred from the tractor to the mower, the aforementioned risk of tilting not existing. Another embodiment of this mower known from EP-A- 0 570 314 is at its one side height-adjustably connected with the three-point suspension of the tractor, and at its other side height-adjustably connected with a ground wheel. In this mower no lifting moment of force is transferred from the tractor to the mower. Mowers of this type are also known from EP-A-0377 962 and EP-A-0 579 564.

The object of the invention is to provide a mower of the type mentioned by way of introduction, which mower obviates the above-mentioned problem.

With a view to meet this object a lift-suspended mower with a mowing aggregate suspended in a carrier construction which is pivotally connected with a frame for mounting on the lift-suspension of a tractor, the mowing aggregate with accompanying carrier construction being pivotally movable between a working position, in which the mowing aggregate and the carrier construction are positioned laterally outside the track of the tractor and a transport position, in which the mower is present behind the tractor within its track, means being provided for transmission of a moment of force from the tractor to the mower to lift it as a whole, wherein the mowing aggregate with accompanying carrier construction comprises at least one weight-relieving support wheel which by means of a pivoting device is lowerable and raisable relative to the mowing aggregate by swinging about a substantially horizontal axis, is characterized in that the support wheel is pivotal about an upwards directed axis, a hydraulic cylinder being connected with said pivoting device, said cylinder being adapted when the mower is connected with the tractor to be connected with the hydraulic system of the tractor in series with the lift of the tractor in order to in the working position of the mower, particularly in connection with turns in the field, to make it possible to simultaneously lift the mowing aggregate with accompanying carrier construction and lowering of the relieving support wheel/s thereby permitting passage of the mowing aggregate over already mowed crop. Hereby the weight-relieving support wheel automatically starts functioning in the working position exactly when it is needed in connection with the lifting of the mower, and a reduction of the moment, to which the tractor is subjected by the mower in its lifted position, is attained without any reduction of the manoeuvrability of the tractor and the mower.

From US-A- 4,193,458 it is in connection with a ground-tilling agricultural machine in form of a tractor-harrow combination per se known to equip the working aggregate with a hydraulically activatable, weight-relieving support wheel which is activated in the transport position to carry part of the weight of the working aggregate towed behind the tractor. In the ground-tilling working position this support wheel has to be constantly raised to avoid compacting of the ground surface tilled by the teeth of the harrow.

During normal work in the field with this known machine it is not an aim that the working aggregate is raisable, not during turns either.

If the hydraulic system of the tractor opens up the possibility that the hydraulic cylinder operating the support wheel is double-acting, the support wheel will automatically be raised, when the mower is lowered, the support wheel thus not disturbing the function of the mower. In case of a single-acting hydraulic cylinder, a spring may be provided in connection with said pivoting device for keeping the support wheel lifted, when said hydraulic cylinder is not actuated for lowering of the support wheel.

The mower preferably comprises a support wheel at each side of the mowing aggregate. Hereby a symmetrical lifting is ensured, whereby the mower in its raised position is prevented from swinging down at one side, whereby it might hit the ground should the occasion arise.

In mowers of the type, where swinging of the mower between the working position and the transport position takes place around a substantially vertical shaft and the mower in its transport position is positioned behind the tractor in substantially horizontal position, problems of a too big moment acting on the tractor may also occur in the transport position. According to an embodiment of the invention these problems may in a manner known per se be solved thereby that said carrier construction is connected with at least one ground wheel for weight-relief of the mower in the transport position. In a further embodiment such a ground wheel may be mounted on an arm fastened to a shaft which is horizontally oriented in the transport position and substantially perpendicular to the direction of travel, said shaft being pivotally journalled on the mower, and a power means comprising a hydraulic cylinder has been established to rotate the shaft, thereby raising or lowering the transport wheel.

The invention will be explained in detail in the following by means of embodiments with reference to the drawing, in which
Fig. 1 shows a mower according to the invention connected with a tractor seen from behind,
Fig. 2 the mower according to Fig. 1 seen from above,
Fig. 3 the mower according to Figs. 1 and 2 seen from the right,
Fig. 4 a view corresponding to Fig. 1 but of another embodiment of the mower,
Fig. 5 the mower according to Fig. 4 seen from the right,
Fig. 6 a further embodiment of the mower according to the invention seen from above and in the transport position, and
Fig. 7 the mower according to Fig. 6 seen from the side.

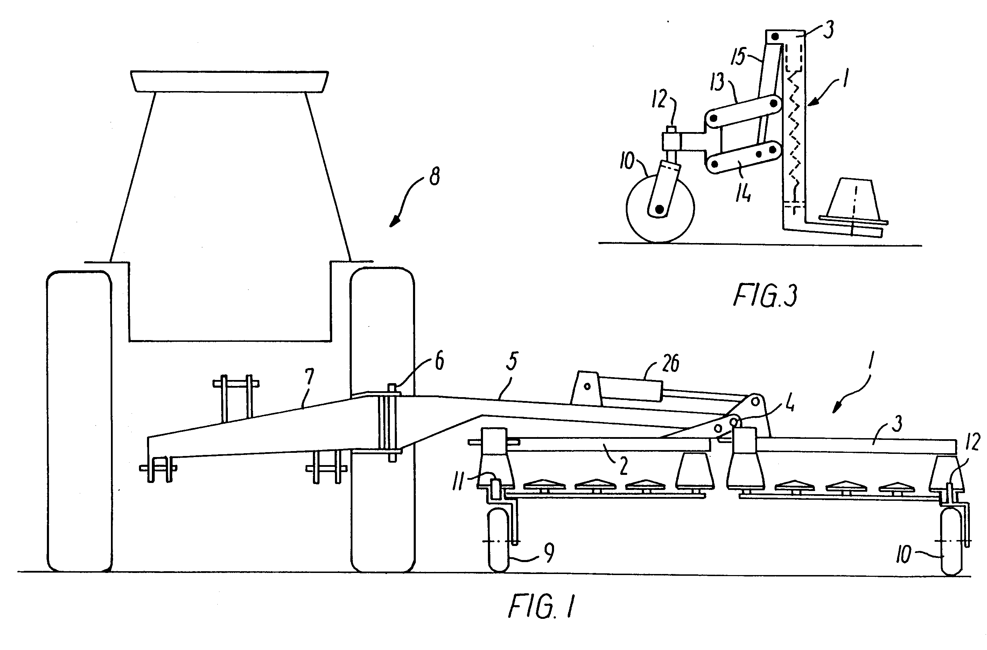

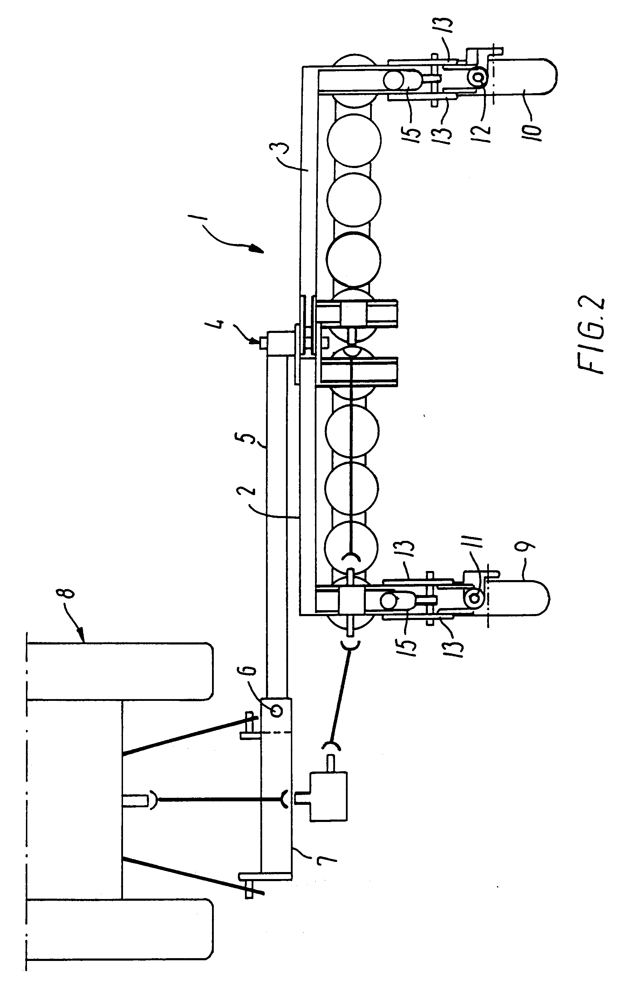

Figs. 1-3 shows a disc mower 1 which is divided in two sections each having their frame bars 2,3. The bars are mutually connected by a hinge 4, at which they are further suspended in a carrier arm 5 which is connected by a second hinge 6 with a carrier frame 7 suspended in the three-point suspension of a tractor 8. Apart from the two-piece design of the mower 1 which is the object of EP patent application no. 95610009.3 (not published), this is for that matter known.

The novel feature of the mower is that it comprises support wheels 9,10, which are mounted at each their end of the mower 1 in such a way that they can rotate around an upwards directed axis 11,12. The connections of the support wheels 9,10 with the mower 1 comprise a pivoting device, in the embodiment shown a parallelogram pivot with arms 13,14 which in a manner known per se is designed in such a way that the support wheels 9,10 are height-displaceable relative to the mower 1.

Between the lower parallel arms 14 and the frame bars 2,3 hydraulic cylinders 15 are provided, by means of which the support wheels 9,10 may be lowered relative to the mower 1, as for instance shown in Fig. 1.

Fig. 1 shows the mower raised by means of the lift of the tractor 8 to a position above the working position. The support wheels 9,10 are lowered and carry at least a part of the weight of the mower 1, such that the moment, with which the mower 1 influences the tractor 8, has been reduced.

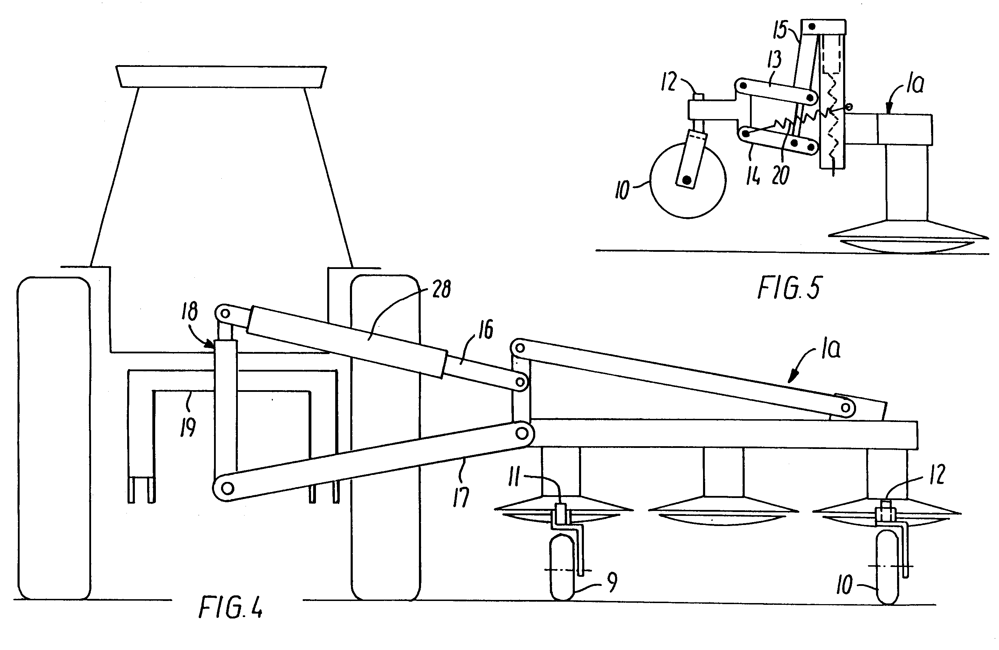

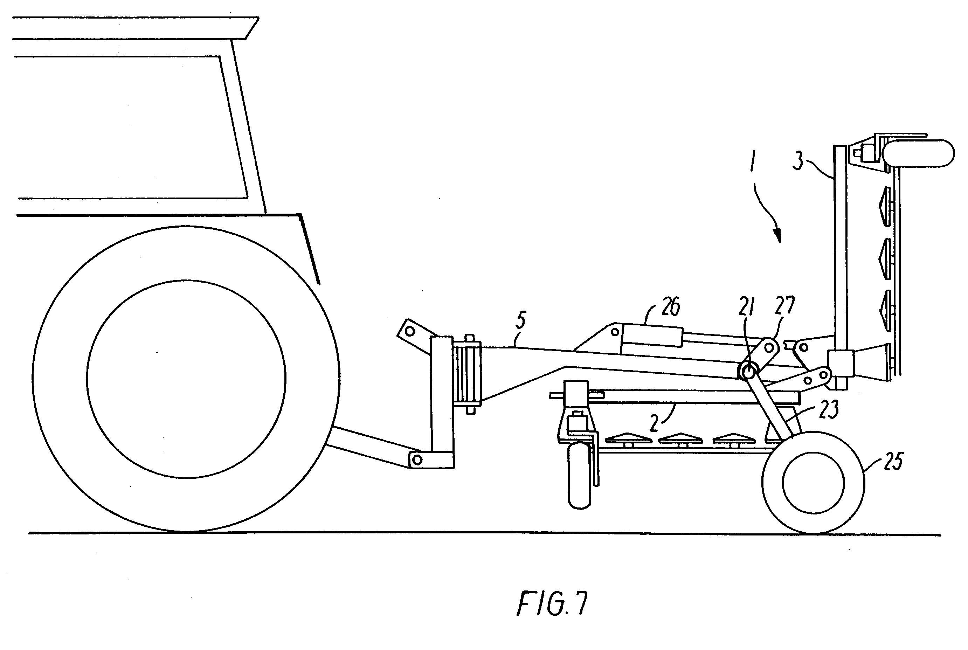

The hydraulic cylinders 15 are preferably connected with the hydraulic system of the tractor in series with the lift used for raising and lowering the mower, such that the support wheels 9,10 are automatically lowered to the position shown in Figs. 1 and 3, when the mower 1 is lifted by means of the lift. If the hydraulic system of the tractor 8 offers the possibility of the hydraulic cylinders 15 being double-acting, the support wheels 9,10 will automatically be raised from the ground, when the lift is activated for lowering the mower 1 to the working position. With a single-acting hydraulic cylinder 15 the support wheels 9,10 can in the working position rest against the ground with their own weight. A hydraulic cylinder 26 serves in the transport position for swinging one half of the mower with the frame bar 3 to a substantially vertical position, as shown in Fig. 7 and described in the above EP application 95610009.3.

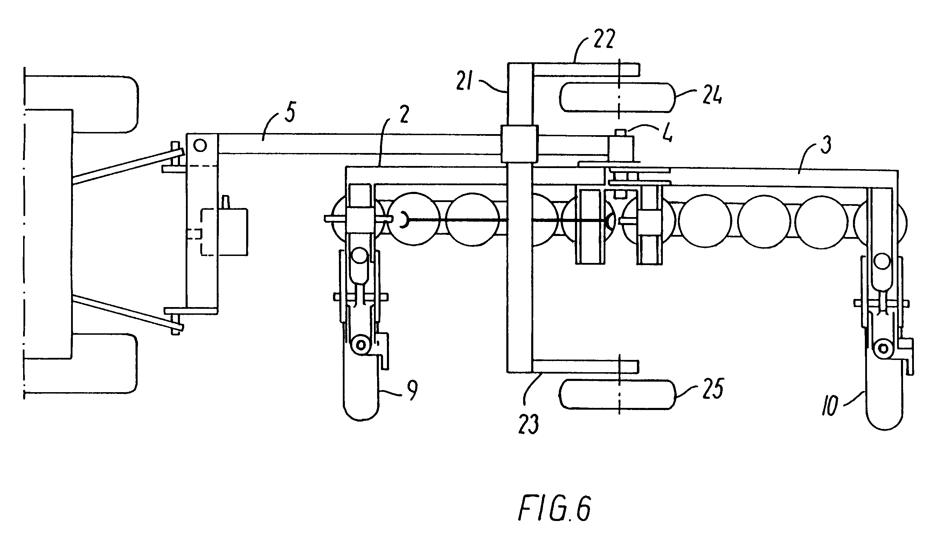

In the embodiment according to Figs. 4 and 5, a drum mower 1a is at its side closest to the tractor connected by two arms 16,17 to a hinge 18 of a carrier frame 19 suspended in the lift of the tractor 8. Also the mower, which like the one described above is of a type known per se is provided with support wheels 9,10 adapted in the same way as described in connection with Figs. 1-3. As will be seen from Fig. 5, a spring 20 may, however, in case of single-acting hydraulic cylinders 15, be connected to the parallelogram pivot 13,14, said spring keeping the support wheels 9,10 raised, when the mower is in the working position and the hydraulic cylinder 15 is not under pressure.

To provide an extra lifting of the mower in the transport position in situations where the lift from the lift of the tractor is not sufficient, one of the arms 16 may as shown be provided with an extra hydraulic cylinder 28.

Figs. 6 and 7 show a further development of the embodiment according to Fig. 1 in transport position behind the tractor 8. Transversely to the carrier arm 5 a pivotable shaft 21 is mounted in this embodiment, said shaft being at the ends connected with swing arms 22,23 carrying ground wheels 24,25.

In the embodiment shown, in which the mower like in Figs. 1-3 may be divided in two, a pivot arm 27 on the shaft 21 may be operatively connected with the hydraulic cylinder 26 for rotation of the shaft and subsequent raising and lowering of the ground wheels 24,25, simultaneously with the mower half with the frame bar 3 moving to the position shown In Fig. 6 and the position shown in Fig. 7, respectively. In a machine not divided in halves the pivot arm 27 may be connected with a separate hydraulic cylinder. By means of the ground wheels 24,25 the mower 1 is at least partially carried, when it is transported in a position behind the tractor 8, as per se known from the above US-A-4,193,458. Besides, Fig. 7 shows the one half of the mower 1 swung up in a way which is described in detail in the above EP patent application no. 95610009.3.

## Claims

1. A lift-suspended mower (1) with a mowing aggregate suspended in a carrier construction (2,3) which is pivotally connected with a frame (7) for mounting on the lift-suspension of a tractor, the mowing aggregate with accompanying carrier construction (2,3) being pivotally movable between a working position, in which the mowing aggregate and the carrier construction (2,3) are positioned laterally outside the track of the tractor and a transport position, in which the mower is present behind the tractor within its track, means being provided for transmission of a moment of force from the tractor to the mower (1) to lift it as a whole, wherein the mowing aggregate with accompanying carrier construction (2,3) comprises at least one weight-relieving support wheel (9,10) which by means of a pivoting device (13,14) is lowerable and raisable relative to the mowing aggregate by swinging about a substantially horizontal axis, **characterized** in that the support wheel (9, 10) is pivotal about an upwards directed axis (11,12), a hydraulic cylinder (15) being connected with said pivoting device (13,14), said cylinder being adapted when the mower (1) is connected with the tractor (8) to be connected with the hydraulic system of the tractor in series with the lift of the tractor in order to in the working position of the mower, particularly in connection with turns in the field, to make it possible to simultaneously lift the mowing aggregate with accompanying carrier construction (2,3) and lowering of the relieving support wheel/s (9,10) thereby permitting passage of the mowing aggregate over already mowed crop.

2. A mower according to claim 1, **characterized** in that in connection with said pivoting device a retaining spring (20) is provided for keeping the support wheel raised when said hydraulic cylinder (15) is not activated for lowering the support wheel (9,10).

3. A mower according to claim 1, **characterized** in that support wheels are present at each side of the mowing aggregate.

4. A mower according to claims 1, 2 or 3, **characterized** in that the connection (16) between the carrier construction of the mower and the frame mounted on the lift-suspension of the tractor comprises an additional hydraulic cylinder (28) for producing an additional lifting of the mower in the transport position.

5. A mower according to any of the preceding claims, in which the swinging of the mower between the working position and the transport position takes place around a substantially vertical shaft (6,8) and the mower in the transport position is behind the tractor in substantially horizontal position, **characterized** in that at least one ground wheel (24,25) is connected with said carrier construction (2,3) for weight relief of the mower (1) in the transport position.

6. A mower according to claim 5, **characterized** in that the ground wheel (24,25) is mounted on an arm (22,23) which is fastened to a shaft (21) which is horizontal in the transport position and substantially perpendicular to the direction of travel, said shaft being pivotally mounted on the mower (1), and a power means comprising a hydraulic cylinder (26) being provided for rotating the shaft (21), thereby raising or lowering the transport wheel (24,25).

## Patentansprüche

1. Schlepperaufgehangene Mähmaschine (1) mit einem in einer Tragkonstruktion (2, 3) aufgehangenen Schneidmittel, welche Konstruktion mit einem Rahmen (7) zur Montage auf der Schlepperaufhängevorrichtung eines Traktors drehbar verbunden ist, wobei das Schneidmittel mit dazugehöriger Tragkonstruktion (2, 3) zwischen einer Arbeitsstellung, worin das Schneidmittel und die Tragkonstruktion (2, 3) lateral ausser der Spur des Traktors angeordnet sind, und einer Transportstellung, worin die Mähmaschine sich hinter dem Traktor innerhalb seiner Spur befindet, geschwenkt werden kann, und ein Mittel zur Übertragung eines Kraftmoments vom Traktor zur Mähmaschine (1) vorgesehen ist, um sie als eine Einheit hochzuheben, worin das Schneidmittel mit der dazugehörigen Tragkonstruktion (2, 3) mindestens ein gewichtentlastendes Stützrad (9, 10) umfasst, das mittels einer Gelenkeinrichtung (13, 14) im Verhältnis zum Schneidmittel und durch Schwenkung um eine im wesentlichen waagerechte Achse gesenkt und gehoben werden kann, dadurch **gekennzeichnet**, dass das Stützrad (9, 10) um eine nach oben gerichtete Achse (11, 12) drehbar angeordnet ist, wobei ein Hydraulikzylinder (15) mit erwähnter Gelenkeinrichtung (13, 14) verbunden ist, und erwähnter Zylinder zur Schaltung mit dem hydraulischen System des Traktors in Serie mit der Aufhängevorrichtung des Traktors, wenn die Mähmaschine (1) mit dem Traktor (8) verbunden ist, eingerichtet ist, um eine Hebung des Schneidmittels mit der dazugehörigen Tragkonstruktion (2, 3) gleichzeitig mit einer Senkung des entlastenden Stützrads oder der entlastenden Stützräder (9, 10) in der Arbeitsstellung der Mähmaschine, insbesonders in Verbindung mit Drehungen auf dem Feld, zu ermöglichen, und dadurch die Passage des Schneidmittels über schon abgeschnittene Ernte zu erlauben.

2. Mähmaschine nach Anspruch 1, dadurch **gekennzeichnet**, dass eine Haltungsfeder (20) zur Festhaltung des Stützrads in erhebter Stellung, wenn erwähnter Zylinder (15) für Senkung des Stützrads (9, 10) nicht aktiviert ist, in Verbindung mit erwähnter Gelenkeinrichtung vorgesehen ist.

3. Mähmaschine nach Anspruch 1, dadurch **gekennzeichnet**, dass Stützräder auf jeder Seite der Mähmaschine angeordnet sind.

4. Mähmaschine nach Anspruch 1, 2 oder 3, dadurch **gekennzeichnet**, dass die Verbindung (16) zwischen der Tragkonstruktion der Mähmaschine und dem auf der Schlepperaufhängevorrichtung des Traktors montierten Rahmen einen weiteren Hydraulikzylinder (28) zur Beschaffung einer zusätzlichen Hebung der Mähmaschine in der Transportstellung umfasst.

5. Mähmaschine nach einem der vorhergehenden Ansprüche, wo die Mähmaschine zwischen der Arbeitsstellung und der Transportstellung um eine im wesentlichen vertikale Achse (6, 8) geschwenkt wird, und die Mähmaschine sich in der Transportstellung hinter dem Traktor in einer im wesentlichen waagerechten Stellung befindet, dadurch **gekennzeichnet**, dass mindestens ein Bodenrad (24, 25) zur Gewichtentlastung der Mähmaschine (1) in der Transportstellung mit erwähnter Tragkonstruktion (2, 3) verbunden ist.

6. Mähmaschine nach Anspruch 5, dadurch **gekennzeichnet**, dass das Bodenrad (24, 25) auf einem Arm (22, 23) montiert ist, der an einer Welle (21) festgemacht ist, die in der Transportstellung waagerecht und auf der Fahrtrichtung im wesentlichen senkrecht ist, wobei erwähnte Welle auf der Mähmaschine (1) drehbar montiert ist, und wobei ein einen Hydralikzylinder (26) umfassendes Kraftmittel zur Drehung der Welle (21) angeordnet ist, und dadurch das Transportrad (24, 25) hebt oder senkt.

## Revendications

1. Faucheuse suspendue à un engin de levage (1) avec un dispositif de coupe suspendu dans une construction porteuse (2, 3) qui est reliée à pivotement à un cadre (7) pour montage à l'engin de levage d'un tracteur, le dispositif de coupe avec la construction porteuse associée (2, 3) pouvant pivoter entre une position de travail où le dispositif de coupe et la construction porteuse (2, 3) sont positionnés latéralement en dehors de la voie du tracteur, et une position de travail où la faucheuse se trouve derrière le tracteur dans sa voie, des moyens étant pourvus pour la transmission d'un moment d'une force depuis le tracteur à la faucheuse (1) pour la relever dans son ensemble, où le dispositif de coupe avec la construction porteuse associée (2, 3) comprend au moins une roue-support déchargeant le poids (9, 10) qui peut être baissée et relevée par rapport au dispositif de coupe au moyen d'un dispositif d'articulation (13, 14) étant mobile autour d'un axe essentiellement horizontal, **caractérisée** en ce que la roue-support (9, 10) peut pivoter autour d'un axe dirigé vers le haut (11, 12), un cylindre hydraulique (15) étant relié audit dispositif d'articulation (13, 14), ledit cylindre étant adapté à être relié au système hydraulique du tracteur en série avec l'engin de levage du tracteur lorsque la faucheuse (1) est reliée au tracteur (8) afin de rendre possible de relever le dispositif de coupe avec la construction porteuse associée (2, 3) et, en même temps, baisser la/les roue(s) déchargeant le poids (9, 10) dans la position de travail de la faucheuse, en particulier par des virages aux champs, et de telle manière permettre le passage du dispositif de coupe au-dessus de la récolte déjà coupée.

2. Faucheuse selon la revendication 1, **caractérisée** en ce qu'en relation avec ledit dispositif d'articulation, un ressort de retenue (20) est pourvu pour maintenir la roue-support relevée lorsque ledit cylindre hydraulique (15) n'est pas activé pour baisser la roue-support (9, 10).

3. Faucheuse selon la revendication 1, **caractérisée** en ce que des roues-supports sont pourvues à chaque côté du dispositif de coupe.

4. Faucheuse selon la revendication 1, 2 ou 3, **caractérisée** en ce que la liaison (16) entre la construction porteuse de la faucheuse et le cadre monté sur l'engin de levage du tracteur comprend un cylindre hydraulique supplémentaire (28) pour produire un levage supplémentaire de la faucheuse dans la position de transport.

5. Faucheuse selon l'une quelconque des revendications précédentes, où le pivotement de la faucheuse entre la position de travail et la position de transport est effectué autour d'un arbre essentiellement vertical (6, 8), et la faucheuse dans la position de transport se trouve derrière le tracteur dans une position essentiellement horizontale, **caractérisée** en ce qu'au moins une roue porteuse (24, 25) est reliée à ladite construction porteuse (24, 25) pour un déchargement de poids de la faucheuse (1) dans la position de transport.

6. Faucheuse selon la revendication 5, **caractérisée** en ce que la roue porteuse (24, 25) est montée sur un bras (22, 23) fixé à un arbre (21) qui est horizontal dans la position de transport et essentiellement perpendiculaire au sens de marche, ledit arbre étant monté à pivotement sur la faucheuse (1), et un moyen de force comprenant un cylindre hydraulique (26) étant pourvu pour tourner l'arbre (21), et ainsi relever ou baisser la roue de transport (24, 25).
